## Europäisches Patentamt

## European Patent Office

## Office européen des brevets

(11) Veröffentlichungsnummer: **0 476 285 B1**

(12) **EUROPÄISCHE PATENTSCHRIFT**

(45) Veröffentlichungstag der Patentschrift: **30.11.94**

(51) Int. Cl.5: **G01M 1/16**, G01M 1/00

(21) Anmeldenummer: **91113006.0**

(22) Anmeldetag: **02.08.91**

(54) **Verfahren und Einrichtung zum selbsttätigen Erkennen von Resonanzüberhöhungen beim Auswuchtvorgang.**

(30) Priorität: **10.09.90 DE 4028656**

(43) Veröffentlichungstag der Anmeldung:
**25.03.92 Patentblatt 92/13**

(45) Bekanntmachung des Hinweises auf die Patenterteilung:
**30.11.94 Patentblatt 94/48**

(84) Benannte Vertragsstaaten:
**DE FR GB**

(56) Entgegenhaltungen:
**DD-A- 273 752**
**DE-C- 683 481**

**TECHNICAL REVIEW, no. 1, 1981, pages 3-32, Narüm, Denmark; J.F.G. WORT: "The fundamentals of industrial balancing machines and their applications"**

**SOVIET INVENTIONS ILLUSTRATED, Derwent Publications Ltd., London, GB; Section EL: Electrical, week E06, class S, No. B3886; & SU-A-823921**

**SOVIET INVENTIONS ILLUSTRATED, Derwent Publications Ltd., London, GB; Section EL:**

**Electrical, week E17, class S, No. E9676; & SU-A-847104**

(73) Patentinhaber: **CARL SCHENCK AG**
**Postfach 4018**
**D-64273 Darmstadt (DE)**

(72) Erfinder: **Trommer, Wolfgang, Dr.**
**Alkmaarstrasse 34**
**W-6100 Darmstadt (DE)**
Erfinder: **Schminke, Karl-Heinz**
**Crumstädter Strasse 39**
**W-6102 Pfungstadt (DE)**

**Beschreibung**

Die Erfindung betrifft ein Verfahren und eine Einrichtung zum selbsttätigen Erkennen von Resonanzüberhöhungen beim Auwuchtmeßvorgang auf permanent kalibrierten, kraftmessenden Auswuchtmaschinen.

Bei auszuwuchtenden Rotoren auf Auswuchtmaschinen stellt dieses ein schwingfähiges System dar, das aus mehreren Massen und unterschiedlichen Federsteifigkeiten besteht. Für permanent kalibrierte, kraftmessende Auswuchtmaschinen ist es zur genauen Meßwerteermittlung erforderlich, daß die Unwuchtmeßwerte nicht im Bereich nahe der Resonanzdrehzahlen erfaßt werden, da hierbei die Meßwertfehler stark ansteigen. Deshalb wird in der Regel in einem Drehzahlbereich die Unwucht gemessen, die bei etwa 30 % der ersten Resonanzdrehzahl liegt. Dabei wird die Resonanzdrehzahl weitgehend von der Größe der Rotormasse und den Rotorträgheitsmomenten, den Lagermassen und der Rotor- und Lagersteifigkeit des jeweiligen Systems von Rotor und Auswuchtmaschine bestimmt.

Bisher wurde die maximal zulässige Auswuchtdrehzahl bei permanent kalibrierten, kraftmessenden Auswuchtmaschinen tabellarisch ermittelt. Dazu konnte der Bediener der Auswuchtmaschine in einer von dem Hersteller vorgegebenen Tabelle die für das jeweilige Rotorgewicht zulässige maximale Meßdrehzahl ablesen. In diesen tabellarischen Drehzahlangaben wurden meist nur maximal zulässige Drehzahlen angegeben, die für symmetrische Rotoren galten. Dabei wurde nur eine Eigenform berücksichtigt, die von einer parallelen Verlagerung eines starren Rotors in nachgiebigen Lagern ausgeht. Für kraftmessende, permanent kalibrierte Auswuchtmaschinen sind neben der vorstehend erwähnten Eigenform in aller Regel noch zwei weitere Eigenformen zu betrachten, deren zugehörige Resonanzdrehzahl in manchen Fällen auch unterhalb der Resonanzdrehzahl der Eigenform bei Parallelverlagerung des Rotors liegen können. Diese beiden Eigenformen setzen zum einen die gegenläufige Bewegung eines relativ starren Rotors bei nachgiebigen Lagern und zum anderen die Durchbiegung eines nachgiebigen Rotors bei relativ steifen Lagerabstützungen voraus.

Welche Resonanzdrehzahl nun bei einem bestimmten Rotor-Lager-System am kleinsten ist, hängt von der Rotormasse und dessen Trägheitsmomenten, den Lagermassen und der Rotor- bzw. Lagersteifigkeit ab. In der Regel bestimmt die Resonanzdrehzahl einer Eigenform die Grenze der permanenten Kalibrierung und die auf die Rotorgeometrie beasierende Ebenentrennung, deren Drehzahl am kleinsten ist. In diesem Fall sind näherungsweise die Gesetzmäßigkeiten des Einmassenschwingers anzusetzen, da diese Eigenform stark dominiert.

Bei Berücksichtigung nur der Eigenform für die parallele Verlagerung eines starren Rotors bei relativ nachgiebigen Lagern kann es deshalb vorkommen, daß die tabellarisch ermittelten maximal zulässigen Meßdrehzahlen für den jeweiligen auszuwuchtenden Rotor zu hoch gewählt werden und es zu Resonanzüberhöhungen kommt, die das Meßergebnis verfälschen, ohne daß es der Bediener feststellt.

Der Erfindung liegt deshalb die Aufgabe zugrunde, ein Verfahren der eingangs genannten Art so zu verbessern, daß bei permanent kalibrierten, kraftmessenden Auswuchtmaschinen eine zu große Annäherung an eine Resonanzdrehzahl erkannt wird.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben. Eine entsprechende Einrichtung betrifft Anspruch 11.

Die Erfindung hat den Vorteil, daß die maximal zulässigen Meßdrehzahlen selbsttätig während des Auswuchtmeßvorgangs überprüft werden und dem Bediener beim Überschreiten dieser Meßdrehzahl ein entsprechender Hinweis gegeben wird.

Gleichfalls ist es bei einer besonderen Ausbildung des Verfahrens vorteilhaft, auch gleichzeitig eine selbsttätige Korrektur der eingegebenen Meßdrehzahl vorzunehmen.

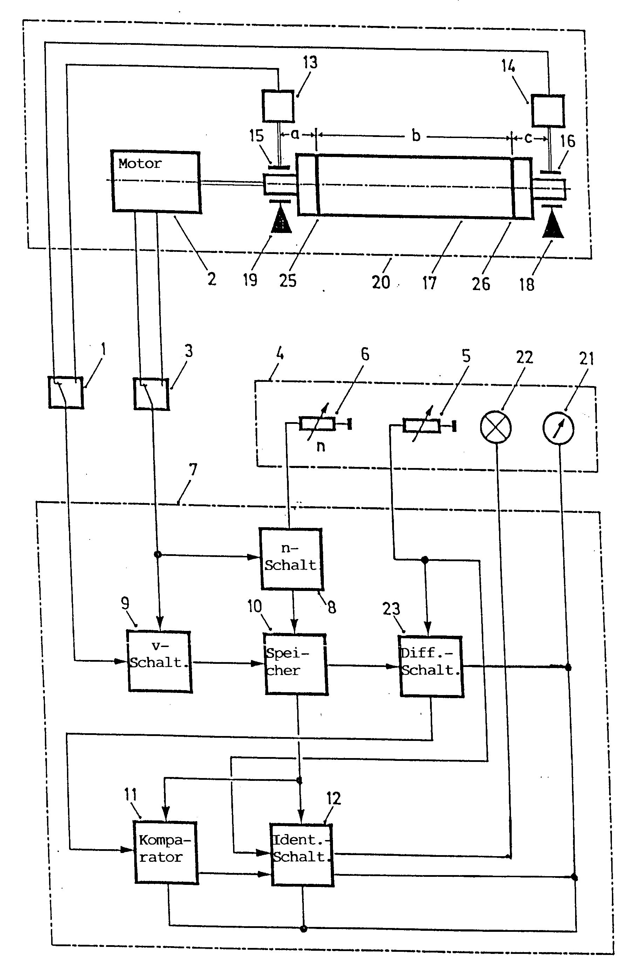

Die Erfindung wird anhand eines Ausführungsbeispiels, das in der Zeichnung dargestellt ist, näher erläutert. Die Zeichnung zeigt:

ein Blockschaltbild einer Auswuchtmaschine mit einer Auswerteeinrichtung und Anzeige- und Eingabeeinheit.

Aus der Zeichnung ist eine herkömmliche Auswuchtmaschine 20 mit einem auszuwuchtenden Rotor 17 ersichtlich, die mit einer Auswerteeinrichtung 7 verbunden ist, durch die die unzulässigen Resonanzüberhöhungen beim Auswuchten erkannt und in einer Anzeige- und Eingabeeinheit 4 signalisiert werden können. Die Auswuchtmaschine 20 besteht im wesentlichen aus zwei Lagerständern 18, 19, die zur Aufnahme des auszuwuchtenden Rotors 17 dienen. An den Lagerständern 18, 19 ist für die Lagerebene 15, 16 ein Meßaufnehmer 13, 14 angebracht. Beide Meßaufnehmer 13, 14 sind über einen gemeinsamen ersten Kanalumschalter 1 mit einer Unwuchtmeßschaltung 9 in der Auswerteeinrichtung 7 elektrisch verbindbar. Der in der Auswuchtmaschine 20 gelagerte Rotor ist an eine Antriebseinheit 2 gekoppelt, in der ein umlaufsynchrones Referenzsignal erzeugt wird. Der Referenzteil der Antriebseinheit 2 ist über einen zweiten Kanalumschalter 3 auch mit der Unwuchtmeßschaltung 9 in der Auswerteeinrichtung 7 verbunden.

Die von den beiden Meßwertgebern 13, 14 gelieferten Meßsignale werden in der Unwuchtmeßschaltung 9 der Auswerteeinrichtung 7 frequenzselektiert und verstärkt. Außerdem werden die Meßsignale in der Unwuchtmeßschaltung 9 doppelt integriert, um ein theoretisch von der Drehzahl unabhängiges Meßsignal zu erhalten. Das umlauffrequente Unwuchtmeßsignal als Ausgangssignal beinhaltet neben den Unwuchtanteilen auch die Meßfehler, die durch Resonanzüberhöhungen bei höheren Unwuchtmeßdrehzahlen auftreten.

Die Meßfehler resultieren hauptsächlich dadurch, daß das Unwuchtmeßsignal anhand einer Gleichung berechnet wird, bei der man unterstellt, daß das Meßsignal proportional der Fliehkraft ist. Da allerdings bei einer kraftmessenden permanent kalibrierten Auswuchtmaschine bei höheren Drehzahlen auch Resonanzerscheinungen auftreten, müßten diese mit berücksichtigt werden. Die Erfindung macht sich nun die Tatsache zunutze, daß unzulässig große Resonanzüberhöhungen dadurch feststellbar sind, daß bei unzulässig hohen Drehzahlbereichen die idealisierten Werte, bei der das Meßsignal proportional der Fliehkraft ist, von den in Wirklichkeit feststellbaren Unwuchtmeßwerten abweicht. Dabei liegt eine Resonanzüberhöhung stets dann vor, wenn die Abweichung mit zunehmender Meßdrehzahl größer wird. Aufgrund dieser Gesetzmäßigkeit muß die Auswerteeinrichtung mindestens drei bei verschiedenen Meßdrehzahlen gewonnene Unwuchtmeßsignale für jede Lagerebene erfassen und abspeichern. Daraus werden dann jeweils die Differenzen gebildet und miteinander verglichen.

Dazu enthält die Auswerteeinrichtung 7 auch eine Drehzahlerfassungsschaltung 8, der die Referenzsignale zugeführt werden. Da diese Referenzsignale rotorsynchrone Anteile enthalten, wird durch die Drehzahlerfassungsschaltung 8 für vorgegebene Zeitzyklen fortlaufend die jeweilige Rotordrehzahl berechnet. Die Drehzahlerfassungsschaltung ist gleichzeitig mit einer Anzeige- und Eingabeeinheit 4 verbunden, durch die der Drehzahlerfassungsschaltung verschiedene Rotordrehzahlen vorgegeben werden können. Dazu ist in der Anzeige- und Eingabeeinheit 4 eine Drehzahleinstellvorrichtung 6 vorgesehen, durch die verschiedene Rotordrehzahlen manuell eingestellt werden können. Die Drehzahlerfassungschaltung 8 vergleicht die voreingestellten Rotordrehzahlen fortlaufend mit den derzeitigen Rotordrehzahlen und erzeugt bei jeder Übereinstimmung mit den vorgegebenen Drehzahlen ein Erfassungssignal, durch das das zugehörige Unwuchtmeßsignal einen Zwischenspeicher 10 der Auswerteeinrichtung 7 zugeführt wird.

Der Zwischenspeicher 10 ist auch mit der Unwuchtmeßschaltung 9 verbunden, die ihm fortlaufend die Ausgangssignale der Unwuchtmeßschaltung liefert. Dadurch werden im Zwischenspeicher 10 für jede eingegebene Rotordrehzahl die jeweiligen Unwuchtmeßsignale gespeichert. Dabei erfaßt der Speicher die Unwuchtmeßsignale getrennt für jede Lagerebene 15, 16. Die Auswerteeinrichtung 7 ist so ausgelegt, daß die Zwischenspeicherung der Unwuchtmeßsignale bereits während des Beschleunigens des Rotors auf seine Sollmeßdrehzahl vorgenommen wird. Es ist aber auch möglich, daß die vorgegebenen Meßdrehzahlen durch das Bedienpersonal separat angefahren werden. Die vorgegebenen Meßdrehzahlen orientieren sich in jedem Fall an der gewünschten höchsten Auswuchtdrehzahl, die die Solldrehzahl des Rotors beim Auswuchtvorgang darstellt. Dabei ist die Solldrehzahl eine maschinen- und rotorabhängige Drehzahl, die im Idealfall einen Drehzahlabstand von der ersten Resonanzdrehzahl von mindestens 70 % einhält. Da diese Solldrehzahl in der Regel aufgrund der ersten Eigenform ermittelt wird, wobei aber real auch andere Eigenformen oder Kombinationen daraus vorliegen können, kann auch schon bei niedrigeren Drehzahlen eine nennenswerte Resonanzüberhöhung vorliegen. Bei permanent kalibrierten kraftmessenden Auswuchtmaschinen ist allerdings die reale Resonanzdrehzahl im praktischen Betrieb rechnerisch nicht zu ermitteln, so daß bei der vorgesehenen Solldrehzahl häufig auch schon eine nennenswerte Resonanzüberhöhung vorliegen kann, die das Meßergebnis verfälscht.

Zur Ermittlung einer unzulässig großen Resonanzüberhöhung werden beim Beschleunigen des Rotors mindestens drei Unwuchtmeßsignale erfaßt und gespeichert. Neben der Meßwertspeicherung für die Sollmeßdrehzahlen sind dies Meßwerte, die bei Drehzahlen deutlich unterhalb der Sollmeßdrehzahl gewonnen wurden. Diese Drehzahlen sollen zwar erheblich kleiner als die Sollmeßdrehzahl sein, aber die kleinste Drehzahl wird so hoch gewählt, daß Zwangskrafterscheinungen möglichst klein gehalten sind. Als vorteilhaft haben sich Meßdrehzahlen erwiesen, die 60 und 80 % der Sollmeßdrehzahl betragen.

Die vom Zwischenspeicher 10 gespeicherten Unwuchtmeßwerte für jeweils jede Lagerebene 15, 16 stehen nun über Verbindungsleitungen einer Differenzrechnerschaltung 23 zur Verfügung. Die Differenzrechnerschaltung 23 bildet nun aus den drei Unwuchtmeßwerten für jede Lagerebene 15, 16 jeweils die vektorielle Differenz aus den beiden benachbarten Unwuchtmeßwerten. Da nur größere Meßwertdifferenzen zu einer nennenswerten Verfälschung des Unwuchtmeßergebnisses führen können, wird bereits in der Differenzrechnerschaltung 23 ein Toleranzvergleich durchgeführt. Zu diesem Zweck ist die Differenzrechnerschaltung 23 auch mit einem Einstellglied 5 in der Anzeige- und Eingabeeinheit 4 verbunden, durch das manuell ein Unwuchttoleranzbereich vorgegeben wird. Der Unwuchttoleranzbereich könnte auch fest eingestellt oder von einem Datenträger abrufbar sein.

In der Differenzrechnerschaltung 23 werden alle Meßwertdifferenzen jeder Lagerebene 15, 16 mit den vorgegebenen Toleranzwerten verglichen. Bleiben dabei die Meßwertdifferenzen innerhalb eines Anteils des vorgegebenen Toleranzbereichs, so wird der Unwuchtmeßwert bei Solldrehzahl in gewohnter Weise zur Anzeige gebracht. Dazu ist die Differenzrechnerschaltung 23 mit dem Anzeigegerät 21 in der Eingabe- und Anzeigeeinheit 4 verbunden. Beim vorbeschriebenen Toleranzvergleich wird der vorgegebene Toleranzbereich um einen bestimmten Wert kleiner als der zulässige Endtoleranzbereich, z. B. nach der ISO 1940 gewählt, um auch die restlichen Meßungenauigkeiten zu berücksichtigen. Außerdem wird der absolute Toleranzwert bei diesem Vergleich hochgerechnet zu einem relativen Toleranzbereich, und zwar im Verhältnis des Meßwertes für die Solldrehzahl $n_s$ zur absoluten Toleranz selbst. Dazu wird in der Differenzrechnerschaltung ein Signal erzeugt, durch den der Unwuchtmeßwert bei Solldrehzahl aus dem Zwischenspeicher 10 zu dem Anzeigegerät 21 durchgeschaltet wird.

Ergibt hingegen der Vergleich in der Differenzrechnerschaltung 23 eine Abweichung, die über diesen vorgegebenen, relativen Toleranzbereich hinausgeht, und liegt der aktuelle Meßwert für die Sollmeßdrehzahl außerhalb des Toleranzbereichs, so werden alle Meßwertdifferenzen einer Vergleichsrechnerschaltung 11 zugeführt. Liegt der akutelle Meßwert für die Sollmeßdrehzahl innerhalb des Toleranzbereiches, so wird der Meßwert in gewohnter Weise zur Anzeige gebracht.

Außerdem ist diese Vergleichsrechnerschaltung 11 noch mit dem Zwischenspeicher 10 verbunden, so daß der Vergleichsrechnerschaltung 11 die Werte der Meßdrehzahlen als auch die einzelnen Unwuchtmeßwerte jeder Lagerebene 15, 16 zur Verfügung stehen. In der Vergleichsrechnerschaltung 11 werden jeweils die beiden Meßwertdifferenzen jeder Lagerebene miteinander verglichen. Ergibt der Vergleich für jede Lagerebene, daß die Meßwertdifferenzen zwischen den beiden höheren Drehzahlen größer sind als zwischen den niedrigeren Drehzahlen, so liegt in der Regel eine Verfälschung des Meßergebnisses durch Resonanzüberhöhung vor. Soweit der Differenzwertevergleich für jede Lagerebene ergibt, daß beide Differenzwerte zwischen den höheren Meßdrehzahlen größer sind als zwischen den kleineren Meßdrehzahlen, wird nachfolgend noch eine Winkelvergleichsrechnung durchgeführt.

Mit hinreichender Genauigkeit könnte allerdings bereits aus der vorstehenden Differenzvergleichsrechnung eine Verfälschung des Meßergebnisses durch Resonanzüberhöhung festgestellt werden. Dann würde bereits bei Feststellung der entsprechenden Differenzwerteabweichung ein Erkennungssignal erzeugt, das dann zur akustischen oder visuellen Anzeige einer Resonanzüberhöhung dienen würde.

Zur Erhöhung der Meßgenauigkeit wird deshalb in der Vergleichsrechnerschaltung 11 zusätzlich noch eine Winkelvergleichsrechnung für jede Lagerebene durchgeführt. Dazu werden für jede Lagerebene die Winkel der beiden benachbarten Unwuchtmeßwerte bezogen auf den Referenzpunkt der benachbarten Unwuchtmeßwerte miteinander verglichen. Nehmen dabei die verglichenen Winkel zwischen den benachbarten Unwuchtmeßwerten mit zunehmender Meßdrehzahl in einer Lagerebene weder proportional zu oder ab oder bleiben diese ungleich, so liegt keine Resonanzüberhöhung vor, so daß der Unwuchtmeßwert bei Solldrehzahl aus dem Zwischenspeicher 10 zum Anzeigegerät 21 durchgeschaltet wird.

Ergibt hingegen die vorgenannte Vergleichsrechnung, daß die Winkel jeder Lagerebene bei ansteigender Meßdrehzahl bezogen auf den Referenzpunkt proportional zur Drehzahländerung kleiner oder größer werden oder auch gleich bleiben, so liegt eine unzulässig hohe Resonanzüberhöhung vor, so daß die Vergleichsrechnerschaltung 11 dann ein Erkennungssignal erzeugt. Das Erkennungssignal dient zur Signalisierung einer unzulässig hohen Resonanzüberhöhung als auch zur Veranlassung einer Erkennungsrechnung. Die Signalisierung erfolgt in einer Signalvorrichtung 22 in der Anzeige- und Eingabeeinheit 4, die sowohl akustisch als auch visuell erfolgen kann. Dadurch wird der Bediener einer derartigen Auswuchtmaschine veranlaßt, die gewählte Sollmeßdrehzahl herabzusetzen und den Auswuchtvorgang zu wiederholen.

In einem weiteren Ausführungsbeispiel kann die Auswerteeinrichtung auch so ausgebildet sein, daß durch weitere Rechenvorgänge die Identifikationsgenauigkeit von Resonanzüberhöhungen bei Unwuchtmessungen erhöht wird. Dazu werden die gewonnenen Meßwerte mit Hilfe einer Funktionsgleichung rechnerisch überprüft. Wird dabei festgestellt, daß alle gemessenen Unwuchtmeßwerte in etwa die Werte einhalten, die sich durch die Funktionsgleichung ergeben, so liegt mit an Sicherheit grenzender Wahrscheinlichkeit eine unzulässig hohe Resonanzüberhöhung vor.

Die Auswerteeinrichtung enthält deshalb eine zusätzliche Rechenschaltung, die aus den gewonnenen Meßwerten $M_1$ und $M_s$ anhand der folgenden Funktionsgleichung

$$x_k = \sum \frac{(u \cdot r)_i}{c} \cdot \omega_k^2 \cdot \frac{1}{1 - (\omega_k / \omega_{oi})^2}$$

die beiden unbekannten Größen $(u \cdot r)_i$ und $\omega_{oi}$ ermittelt.

Es bedeuten:

x = Meßsignal

u = Unwuchtmasse

r = Radius der Unwucht zur Schaftachse

c = Abstützsteifigkeit des Rotors

$\omega_k$ = Winkelgeschwindigkeit der jeweiligen Meßdrehzahl

$\omega_o$ = Eigenwinkelgeschwindigkeit von Rotor und Auswuchtmaschine

k = Anzahl der insgesamt ermittelten Meßwerte

i = Anzahl der Eigenformen

Bei Betrachtung von nur einer Eigenform genügen zwei Meßwerte, bei zwei Eigenformen vier Meßwerte und bei drei Eigenformen sechs Meßwerte zur Bestimmung der Unbekannten. Da die Meßwerte immer mit gewissen Fehlern behaftet sind, können auch mehr als die minimal notwendige Menge an Meßwerten verwendet werden und so eine Erhöhung der Genauigkeit mit Hilfe einer Ausgleichsrechnung erzielt werden.

In der Auswerteschaltung kann mit Hilfe der Funktionsgleichung für jede Meßdrehzahl ein Unwuchtmeßwert berechnet werden, der sich ergeben müßte, wenn eine unzulässige Resonanzüberhöhung vorliegen würde. Die Auswerteinrichtung könnte deshalb zweckmäßigerweise so ausgebildet sein, daß sie die gemessenen Differenzwerte mit den errechneten Differnzwerten bei entsprechender Drehzahl miteinander vergleicht und bei hinreichender Übereinstimmung das Vorliegen einer unzulässig hohen Resonanzüberhöhung signalisiert. Bei hinreichender Anzahl an Unwuchtmeffwerten kann auch die jeder Eigenform zugehörige Resonanzdrehzahl errechnet und aus der niedrigsten die maximale Meßdrehzahl festgelegt werden.

Weiterhin kann die Auswerteeinrichtung auch so ausgebildet sein, daß selbsttätig eine Signalisierung erfolgt, wenn die maximal zulässige Meßdrehzahl überschritten wird.

In einer anderen Ausführungsart könnte das Erkennungssignal einer Antriebssteuerungsschaltung zugeführt werden, das dann die Sollmeßdrehzahl um einen bestimmten Betrag herabsetzt. Dazu müßte der Antrieb der Auswuchtmaschine kurzzeitig abgeschaltet werden, um den Meßvorgang bei niedrigeren Meßdrehzahlen zu wiederholen. Würde sich bei dieser niedrigeren Sollmeßdrehzahl eine nennenswerte Resonanzüberhöhung nicht mehr zeigen, so wäre der Unwuchtmeßwert bei Solldrehzahl als endgültiger Meßwert heranzuziehen. Läge hingegen trotzdem noch eine nennenswerte Resonanzüberhöhung vor, so könnte dieser Vorgang selbsttätig solange wiederholbar sein, bis eine Resonanzüberhöhung vernachlässigbar ist.

Bei der vorliegenden Ausführungsform wird das Erkennungssignal noch einer Identifikationsschaltung zugeführt. Diese Identifikationsschaltung 12 ermittelt, welche Eigenformen, d. h. ob in erster Linie die Nachgiebigkeit des Rotors oder die der Abstützung, zu der unzulässig hohen Resonanzüberhöhung geführt hat. Dadurch erhält der Bediener einen Hinweis darauf, ob die unzulässig hohe Resonanzüberhöhung durch den Rotor selbst oder durch die Abstützung in der jeweiligen Auswuchtmaschine verursacht wurde. Der Identifikationsrechnerschaltung 12 werden deshalb noch zusätzlich die Werte für die tatsächliche Rotormasse G, der Abstand des Rotorschwerpunktes s vom rechten Rotorlager (Position wenn der Schwerpunkt rechts vom Lager ist) und der Abstand L der Lager voneinander eingegeben. Diese Werte können der Auswerteeinrichtung aber auch selbsttätig zugeführt werden, indem die Rotormasse durch unter den Lagern angebrachte Kraftmeßzellen feststellbar ist. Genauso ist es möglich, den Rotorschwerpunkt aus den in den Lagern ermittelten Gewichtskräften und den Abstand der beiden Lager voneinander zu errechnen. Darüber hinaus könnte der Lagerabstand auch selbsttätig durch eine elektrische Meßeinrichtung erfaßt werden oder bei festen Lagerabständen fest eingebbar sein.

In der Identifikationsrechnerschaltung 12 wird aus den eingegebenen Rotor- und Maschinendaten aufgrund der nachfolgenden Näherungsformel

$$G_E = G [(1 + 2 \cdot S/L)^2 + 1]$$

die Ersatzmasse $G_E$ berechnet. In einem weiteren Rechenschritt wird in der Identifikationsschaltung 12 nun ein Maschinenkennwert $G_E \cdot n_s^2$ errechnet. Dieser Wert wird nun mit einem maschinenmäßig vorgegebe-

nen $Gn^2$-Wert verglichen. Ist dabei der $Gn^2$-Wert gleich oder größer dem errechneten $G_E \cdot n_s^2$-Wert so wird dies in einem Anzeigefeld signalisiert. Daraus kann ein Bediener der Auswuchtmaschine folgern, daß die unzulässig hohe Resonanzüberhöhung in erster Linie einer nicht vernachlässigbaren Rotornachgiebigkeit zugeordnet werden muß.

Darüber hinaus kann durch die Indentifikationsschaltung gleichzeitig überprüft werden, ob der Bediener bei der Wahl der Sollmeßdrehzahl nicht den zulässigen $Gn^2$-Wert der jeweiligen Auswuchtmaschine überschreitet. Dies wird dadurch erreicht, daß durch Vorgabe oder durch selbsttätige Erfassung der tatsächlichen Rotormasse, des Abstandes des Rotorschwerpunktes von einem der Lager sowie dem Lagerabstand, nach der vorstehenden Näherungsformel die Ersatzmasse $G_E$ in der Identifikationsrechnerschaltung 12 errechnet wird. Daraus könnte dann in einer weiteren Rechenschaltung die maximal zulässige Solldrehzahl $n_s$ errechnet werden. Diese könnte durch eine Vergleicherschaltung mit der eingegebenen Sollmeßdrehzahl verglichen werden und bei deren Überschreitung könnte eine Signalisierung erfolgen oder auch eine selbsttätige Herabsetzung der Sollmeßdrehzahl auf die von der Rechenschaltung errechnete maximal zulässige Solldrehzahl vorgenommen werden.

**Patentansprüche**

1. Verfahren zum selbsttätigen Erkennen von Resonanzüberhöhungen bei einem Auswuchtmeßvorgang auf permanent kalibrierten, kraftmessenden Auswuchtmaschinen, dadurch gekennzeichnet, daß bei Auswuchtmaschinen mit zwei Lagerebenen (15, 16) für mindestens drei Meßdrehzahlen Unwuchtmeßsignale pro Lagerebene (15, 16) erfaßt und hieraus in einer Auswerteeinrichtung (7) mindestens zwei Differenzwerte der drehzahlmäßig benachbarten Unwuchtmeßwerte gebildet werden und dann eine Resonanzüberhöhung festgestellt wird, wenn die Differenzwerte zwischen den benachbarten höheren Meßdrehzahlen um einen Faktor größer sind als die zwischen den benachbarten niedrigeren Drehzahlen.

2. Verfahren zum selbsttätigen Erkennen von Resonanzüberhöhungen nach Anspruch 1, dadurch gekennzeichnet, daß die Unwuchtmeßsignale pro Lagerebene (15, 16) bei der Sollmeßdrehzahl, die die maximal zulässige Auswuchtdrehzahl darstellt, und zweier unterhalb dieser Meßdrehzahlen liegenden weiteren Drehzahlen ermittelt werden.

3. Verfahren zum selbsttätigen Erkennen von Resonanzüberhöhungen nach Anspruch 1 oder 2, dadurch gekennzeichnet, daß die Auswerteeinrichtung (7) so ausgebildet ist, daß diese eine Resonanzüberhöhung feststellt, wenn zusätzlich die Winkel jeder Lagerebene (15, 16) bei ansteigender Meßdrehzahl bezogen auf den Referenzpunkt mit Drehzahländerung entweder kleiner oder größer werden oder gleich bleiben.

4. Verfahren zum selbsttätigen Erkennen von Resonanzüberhöhungen nach einem der vorhergehenden Ansprüche, dadurch gekennzeichnet, daß die Auswerteeinrichtung (7) so ausgebildet ist, daß diese aus mindestens zwei Unwuchtmeßwerten den Verlauf des Unwuchtwertes in Abhängigkeit der Meßdrehzahl ermittelt.

5. Verfahren zum selbsttätigen Erkennen von Resonanzüberhöhungen nach Anspruch 4, dadurch gekennzeichnet, daß aus dem errechneten Unwuchtwerteverlauf jeweils Differenzwerte bei den entsprechenden Drehzahlen errechnet und diese mit den gemessenen Differenzmeßwerten verglichen werden und dann eine unzulässige Resonanzüberhöhung festgestellt wird, wenn die verglichenen Werte weitgehend übereinstimmen.

6. Verfahren zum selbsttätigen Erkennen von Resonanzüberhöhungen nach einem der vorhergehenden Ansprüche, dadurch gekennzeichnet, daß die Unwuchtmeßsignale für eine beliebige Anzahl von Meßdrehzahlen unterhalb der Solldrehzahl erfaßt werden und die Differenzwerte mit der jeweils benachbarten höheren Meßdrehzahl je Lagerebene (15, 16) verglichen werden.

7. Verfahren zum selbsttätigen Erkennen von Resonanzüberhöhungen nach einem der vorhergehenden Ansprüche, dadurch gekennzeichnet, daß nur die Solldrehzahl vorgegeben wird, woraus in der Auswerteeinrichtung (7) die niedrigeren Meßdrehzahlen berechnet werden.

EP 0 476 285 B1

**8.** Verfahren zum selbsttätigen Erkennen von Resonanzüberhöhungen nach einem der vorhergehenden Ansprüche, dadurch gekennzeichnet, daß beim Feststellen einer Resonanzüberhöhung dies in einem Anzeigegerät (22) akustisch oder visuell signalisiert wird.

**9.** Verfahren zum selbsttätigen Erkennen von Resonanzüberhöhungen nach einem der vorhergehenden Ansprüche, dadurch gekennzeichnet, daß beim Erkennen einer Resonanzüberhöhung in der Auswerteeinrichtung (7) zunächst ein Toleranzvergleich durchgeführt wird, wobei die Differenz der Unwuchtmeßwerte bei Solldrehzahl mit einem bestimmten Anteil der zulässigen, relativen Unwuchttoleranz verglichen wird und nur dann eine Signalisierung erfolgt, wenn der Differenzwert größer als der Toleranzanteil ist.

**10.** Verfahren zum selbsttätigen Erkennen von Resonanzüberhöhungen nach Anspruch 9, dadurch gekennzeichnet, daß bei Feststellung einer Resonanzüberhöhung die Meßdrehzahl so lange abgesenkt wird, bis die Differenz zwischen den beiden benachbarten Unwuchtmeßwerten bei den niedrigsten Meßdrehzahlen kleiner ist als ein bestimmter Anteil der zulässigen Unwuchttoleranz.

**11.** Einrichtung zur Durchführung des Verfahrens nach einem der Ansprüche 1 bis 10, gekennzeichnet durch folgende Merkmale:
a) es ist eine Auswerteeinrichtung (7) vorgesehen, die mit je einem Meßwertgeber (13, 14) je Lagerebene (15, 16) ausgestattet ist und einen rotorsynchronen Referenzsignalgeber (2) enthält;
b) die Einrichtung enthält eine Eingabe- und Anzeigeeinheit (4), die über eine Drehzahleinstellvorrichtung (6), ein Einstellglied (5) zur Toleranzvorgabe, eine Signalvorrichtung (22) und ein Anzeigegerät (21) verfügt, die mit der Auswerteeinrichtung (7) verbunden sind;
c) daß eine Auswerteeinrichtung (7) vorgesehen ist, die elektronische Schaltungen (8, 9, 10, 23, 11, 12) enthält, die während oder nach dem Unwuchtmeßvorgang die Rechenschritte nach einem der Ansprüche 1 bis 10 durchführen und Ausgangssignale erzeugt, durch die das Anzeigegerät (21) und/oder die Signalvorrichtung (22) in der Eingabe- und Anzeigeeinheit (4) ansteuerbar ist.

**Claims**

**1.** Method of automatic recognition of resonance rises in a balance measuring operation on permanently calibrated force-measuring balancing machines, characterised in that in balancing machines with two bearing planes (15, 16) for at least three measurement speeds imbalance measurement signals per bearing plane (15, 16) are detected and from these at least two difference values are formed in an evaluation arrangement (7) from the imbalance measurement values which are adjacent in terms of speed and a resonance rise is determined when the difference values between the adjacent higher measurement speeds are greater by a factor than those between the adjacent lower speeds.

**2.** Method of automatic recognition of resonance rises according to Claim 1, characterised in that the imbalance measurement signals per bearing plane (15, 16) are determined in the case of the nominal measurement speed which represents the maximum permissible balance speed and two further speeds lying below this measurement speed.

**3.** Method of automatic recognition of resonance rises according to Claim 1 or 2, characterised in that the evaluation arrangement (7) is constructed so that it establishes a resonance rise when as the measurement speed increases based on the reference point the angles of each bearing plane (15, 16) additionally become smaller or greater or remain the same with the change in speed.

**4.** Method of automatic recognition of resonance rises according to one of the preceding claims, characterised in that the evaluation arrangement (7) is constructed so that it determines the development of the imbalance value as a function of the measurement speed from at least two imbalance measurement values.

**5.** Method of automatic recognition of resonance rises according to Claim 4, characterised in that in each case difference values are calculated at the corresponding speeds from the calculated imbalance value development and these are compared with the measured difference measurement values and an inadmissible resonance rise is established when the compared values largely correspond.

7

**6.** Method of automatic recognition of resonance rises according to one of the preceding claims, characterised in that the imbalance measurement signals for any number of measurement speeds below the nominal speed are detected and the difference values are compared with the respective adjacent higher measurement speed for each bearing plane (15, 16).

**7.** Method of automatic recognition of resonance rises according to one of the preceding claims, characterised in that only the nominal speed is predetermined from which the lower measurement speeds are calculated in the evaluation arrangement (7).

**8.** Method of automatic recognition of resonance rises according to one of the preceding claims, characterised in that when a resonance rise is established this is signalled acoustically or visually in an indicator device (22).

**9.** Method of automatic recognition of resonance rises according to one of the preceding claims, characterised in that when a resonance rise is established in the evaluation arrangement (7) a tolerance comparison is first of all carried out in which the difference in the imbalance measurement values at the nominal speed is compared with a specific component of the admissible relative imbalance tolerance and signalling only takes place when the difference value is greater than the tolerance component.

**10.** Method of automatic recognition of resonance rises according to Claim 9, characterised in that when a resonance rise is established the measurement speed is reduced until the difference between the two adjacent imbalance measurement values at the lowest measurement speeds is smaller than a specific component of the admissible imbalance tolerance.

**11.** Apparatus for carrying out the method according to one of Claims 1 to 10, characterised by the following features:
a) an evaluation arrangement (7) is provided which is equipped with a measurement value transmitter (13, 14) for each bearing plane (15, 16) and contains a reference signal generator (2) which is synchronous with the rotor;
b) the apparatus contains an input and indicator unit (4) which has a speed-setting device (6), a setting element (5) for predetermining the tolerance, a signal device (22) and an indicator device (21), which are connected to the evaluation arrangement (7);
c) that an evaluation arrangement (7) is provided which contains electronic circuits (8, 9, 10, 23, 11, 12) which carry out the calculation steps according to one of Claims 1 to 10 during or after the imbalance measurement operation and generate output signals by means of which the indicator device (21) and/or the signal device (22) in the input and indicator unit (4) can be controlled.

**Revendications**

**1.** Procédé de reconnaissance automatique de suraugmentation de résonance lors d'une mesure d'équilibrage sur des machines à équilibrer calibrées en permanence, mesurant la force, caractérisé en ce que dans le cas de machines à équilibrer comportant deux plans d'appui (15, 16) pour au moins trois vitesses de mesure, des signaux de mesure de balourd sont détectés par plan d'appui (15, 16) et à partir de ceux-ci au moins deux valeurs différentielles des valeurs mesurées du balourd, voisines en ce qui concerne la vitesse de rotation, sont formées dans un dispositif d'exploitation (7) et une suraugmentation de résonance est ensuite constatée lorsque les valeurs différentielles entre les grandes vitesses de mesure voisines sont supérieures d'un facteur aux valeurs différentielles entre les petites vitesses voisines.

**2.** Procédé de reconnaissance automatique de suraugmentation de résonance selon la revendication 1, caractérisé en ce que les signaux de mesure du balourd par plan d'appui (15, 16) sont déterminés à la vitesse de mesure de consigne, qui constitue la vitesse d'équilibrage maximale admissible, et à deux autres vitesses, inférieures à ces vitesses de mesure.

**3.** Procédé de reconnaissance automatique de suraugmentation de résonance selon le revendications 1 ou 2, caractérisé en ce que le dispositif d'exploitation (7) est conçu de manière que celui-ci constate une suraugmentation de résonance si en supplément les angles de chaque plan d'appui (15, 16) augmentent ou diminuent ou restent égaux lorsque la vitesse de mesure augmente par rapport au point de référence avec variation de vitesse.

**4.** Procédé de reconnaissance automatique de suraugmentation de résonance sel on l'une des revendications précédentes, caractérisé en ce que le dispositif d'exploitation (7) est conçu de manière que celui-ci détermine, à partir d'au moins deux valeurs mesurées du balourd, la variation de la valeur du balourd en fonction de la vitesse de mesure.

**5.** Procédé de reconnaissance automatique de suraugmentation de résonance selon la revendication 4, caractérisé en ce qu'à partir de la variation de la valeur calculée du balourd il est calculé chaque fois des valeurs différentielles pour les vitesses correspondantes et celles-ci sont comparées aux valeurs différentielles mesurées et une suraugmentation de résonance inadmissible est alors constatée si les valeurs comparées coïncident presque totalement.

**6.** Procédé de reconnaissance automatique de suraugmentation de résonance selon l'une des revendications précédentes, caractérisé en ce que les signaux de mesure du balourd sont enregistrés pour un nombre quelconque de vitesses de mesure inférieures à la vitesse de consigne et les valeurs différentielles sont comparées à la vitesse de mesure supérieure voisine par plan d'appui (15, 16).

**7.** Procédé de reconnaissance automatique de suraugmentation de résonance selon l'une des revendications précédentes, caractérisé en ce que seule est imposée la vitesse de consigne à partir de laquelle les vitesses de mesure plus basses sont calculées dans le dispositif d'exploitation (7).

**8.** Procédé de reconnaissance automatique de suraugmentation de résonance selon l'une des revendications précédentes, caractérisé en ce que dans le cas où une suraugmentation de résonance est constatée, ceci est signalé acoustiquement ou optiquement dans un appareil d'affichage (22).

**9.** Procédé de reconnaissance automatique de suraugmentation de résonance selon l'une des revendications précédentes, caractérisé en ce que dans le cas où une suraugmentation de résonance est décelée dans le dispositif d'exploitation (7), il est procédé d'abord à une comparaison de tolérance, la différence des valeurs mesurées du balourd à la vitesse de consigne étant comparée à un pourcentage déterminé de la tolérance de balourd relative admissible et une signalisation ne s'effectue alors que si la valeur différentielle est supérieure à ce pourcentage déterminé de tolérance.

**10.** Procédé de reconnaissance automatique de suraugmentation de résonance selon la revendication 9, caractérisé en ce que dans le cas où une suraugmentation de résonance est constatée, la vitesse de mesure est abaissée jusqu'à ce que la différence entre les deux valeurs mesurées du balourd voisines aux vitesses de mesure les plus basses est inférieure à un pourcentage déterminé de la tolérance de balourd admissible.

**11.** Procédé de mise en oeuvre du procédé selon l'une des revendications 1 à 10, caractérisé par les caractéristiques suivantes :
a) il est prévu un dispositif d'exploitation (7) qui comporte un capteur de valeurs mesurées (13, 14) par plan d'appui (15, 16) et un capteur de signaux de référence (2) synchronisé avec le rotor ;
b) le dispositif comporte une unité de saisie et d'affichage (4) qui dispose d'un dispositif de réglage de vitesse (6), d'un organe de réglage (5) pour la sélection de la tolérance, d'un dispositif de signalisation (22) et d'un appareil d'affichage (21), lesquels sont connectés au dispositif d'exploitation (7) ;
c) il est prévu un dispositif d'exploitation (7) qui contient des circuits électroniques (8, 9, 12, 23, 11, 12), qui exécutent pendant ou après la mesure du balourd les étapes de calcul selon l'une des revendications 1 à 10 et qui produit des signaux de sortie par lesquels l'appareil d'affichage (21) et/ou le dispositif de signalisation (22) dans l'unité de saisie et d'affichage (4), peut être commandé.